(19) Europäisches Patentamt
European Patent Office
Office européen des brevets

(11) **EP 1 359 433 B1**

(12) **FASCICULE DE BREVET EUROPEEN**

(45) Date de publication et mention
de la délivrance du brevet:
**11.10.2006 Bulletin 2006/41**

(51) Int Cl.:
*G01S 13/02* *(2006.01)*    *G06F 9/46* *(2006.01)*

(21) Numéro de dépôt: **03101089.5**

(22) Date de dépôt: **18.04.2003**

(54) **Procédé d'ordonnancement de pointages pour un radar multifonction, un sonar ou pour un lidar**

Stahl-Scheduling-Methode für ein Multi-Funktionsradar, sonar oder lidar

Beam scheduling method for a multifunction radar, sonar or a lidar

(84) Etats contractants désignés:
**AT BE BG CH CY CZ DE DK EE ES FI FR GB GR
HU IE IT LI LU MC NL PT RO SE SI SK TR**

(30) Priorité: **03.05.2002 FR 0205578**

(43) Date de publication de la demande:
**05.11.2003 Bulletin 2003/45**

(73) Titulaire: **Thales**
**75008 Paris (FR)**

(72) Inventeur: **DELTOUR, Jean-Claude**
**94117 CX, ARCUEIL (FR)**

(74) Mandataire: **Lucas, Laurent Jacques et al
Marks & Clerk France
31-33 Avenue Aristide Briand
94117 Arcueil Cédex (FR)**

(56) Documents cités:
**US-A- 3 587 054**

• HUIZING A G ET AL: "An efficient scheduling algorithm for a multifunction radar" 1996 IEEE INTERNATIONAL SYMPOSIUM ON PHASED ARRAY SYSTEMS AND TECHNOLOGY. REVOLUTIONARY DEVELOPMENTS IN PHASED ARRAYS (CAT. NO.96TH8175), PROCEEDINGS OF INTERNATIONAL SYMPOSIUM ON PHASED ARRAY SYSTEMS AND TECHNOLOGY, BOSTON, MA, USA, 15-18 OCT. 1996, pages 359-364, XP002227490 1996, New York, NY, USA, IEEE, USA ISBN: 0-7803-3232-6

• BARBATO A ET AL: "An improved scheduling algorithm for a naval phased array radar" INTERNATIONAL CONFERENCE RADAR 92 (CONF. PUBL. NO.365), BRIGHTON, UK, 12-13 OCT. 1992, pages 42-45, XP002227491 1992, London, UK, IEE, UK ISBN: 0-85296-553-2

• ZHANG BOYAN ET AL: "Computer control techniques of phased array radars" JOURNAL OF SYSTEMS ENGINEERING AND ELECTRONICS, 1998, CHINA OCEAN PRESS BEIJING, CHINA, vol. 9, no. 1, pages 30-36, XP002227492 ISSN: 1004-4132

• CHIN-FU KUO ET AL: "Real-time digital signal processing of component-oriented phased array radars" PROCEEDINGS 21ST IEEE REAL-TIME SYSTEMS SYMPOSIUM, PROCEEDINGS REAL-TIME SYSTEMS SYMPOSIUM, ORLANDO, FL, USA, 27-30 NOV. 2000, pages 99-108, XP002227493 2000, Piscataway, NJ, USA, IEEE, USA ISBN: 0-7695-0900-2

• KOROUSIC-SELJAK B: "TASK SCHEDULING POLICIES FOR REAL-TIME SYSTEMS" MICROPROCESSORS AND MICROSYSTEMS, IPC BUSINESS PRESS LTD. LONDON, GB, vol. 18, no. 9, 1 novembre 1994 (1994-11-01), pages 501-511, XP000483414 ISSN: 0141-9331

EP 1 359 433 B1

**Description**

La présente invention concerne un procédé d'ordonnancement de tâches issues d'une liste à laquelle de nouvelles tâches peuvent être ajoutées après le choix d'une tâche, et ce au cours de l'ordonnancement. Elle s'applique notamment à l'ordonnancement de pointages d'un radar, d'un sonar ou d'un lidar.

Dans un radar à balayage électronique, les tâches à ordonnancer sont les pointages du radar. Un radar à balayage électronique peut dépointer son faisceau de façon instantanée dans un cône d'axe perpendiculaire au plan de l'antenne. Il existe des radars multifonctions. Un radar multifonction possède différents modes de fonctionnement (antenne tournante, antenne arrêtée, mode mixte, antenne multi-dales...) et effectue plusieurs types de pointages. Ces différents types de pointages correspondent à différentes missions opérationnelles : la détection (pointages de veille), le pistage de cibles (pointages de poursuite), l'identification, le guidage de missiles...

Un radar comprend généralement un générateur de requêtes, qui traduit les missions en pointages. A une mission de veille correspondent des pointages permettant de mailler un espace de veille. A une mission de poursuite correspond un ou plusieurs pointages permettant de suivre une piste. Les pointages des missions de veille et des missions de poursuite sont destinés à être exécutés de manière périodique. Il existe aussi des pointages dont l'exécution est sporadique, notamment les pointages de confirmation (suite à une détection lors d'une veille) et les pointages de ré-acquisition (suite à une non détection lors d'une poursuite). Ces pointages sporadiques peuvent être prioritaires par rapport aux pointages périodiques.

L'ordonnancement est la détermination de l'ordre d'exécution des pointages, périodiques ou sporadiques. Afin d'ordonnancer les pointages, on peut construire des trames de longueurs temporelles déterminées. Lorsqu'une trame est en train de se construire, la précédente est exécutée par le radar. Cet ordonnancement fonctionne donc en temps réel, car le temps nécessaire à la construction d'une trame doit être inférieur à la durée d'exécution de la précédente par le radar. A cet effet, il est nécessaire d'utiliser un algorithme rapide, basé sur une politique d'ordonnancement simple. Ceci permet à cet algorithme de fonctionner en un temps restreint, compatible avec les contraintes imposées par l'exécution en temps réel.

Toutefois, cette manière d'ordonnancer les pointages ne permet pas, pendant la durée de construction d'une trame, de prendre en compte de nouveaux pointages. Il existe donc un temps de latence proportionnel à la longueur d'une trame.

Il est donc souhaitable de diminuer ce temps de latence. Or ceci réduit d'autant le temps disponible pour effectuer l'ordonnancement. Or l'ordonnancement temporel des pointages est un problème d'optimisation multicritère, qui consiste à la fois à maximiser la charge (c'est à dire exécuter un maximum de pointages) du radar et à exécuter les pointages les plus importants. Etant donné la combinatoire exponentielle de ce problème, il n'existe pas d'algorithme permettant, en un temps restreint, de donner une solution optimale.

Une demande brevet US 3 587 054 décrit un procédé d'ordonnancement appliqué à un radar.

La publication XP002227490 de Huizing A. G. et AL. "An effcient scheduling algorithm for a multifunction radar", Proceedings of International Symposium on phased array systems and Technology, Boston, Ma, USA, 15-18 Oct. 1996 pages 359-364, décrit un procédé d'ordonnancement appliqué à un radar multifonction.

Par ses caractéristiques, telles qu'elles seront décrites et revendiquées ci-après, l'invention vise à ordonnancer des tâches de façon rapide pour diminuer le temps de latence, et ce sans exécuter de tâche moins prioritaire au détriment d'une tâche plus prioritaire.

Pour satisfaire à cet objectif et obtenir d'autres avantages qui ressortiront plus loin, l'invention a pour objet un procédé d'ordonnancement de tâches. Ce procédé permet de prendre en compte de nouvelles tâches dès qu'une tâche est ordonnancée. Selon ce procédé :

- on réalise au moins un premier filtrage, ce filtrage étant appliqué à une première liste contenant des tâches destinées à être ordonnancées, le résultat de ce filtrage étant une seconde liste ne contenant que les tâches de la première liste de priorité maximale ou dont la durée d'exécution est inférieure ou égale à une durée maximale théorique, ladite durée maximale théorique pour une tâche donnée étant le minimum de la quantité $E[i] - D[i] - H0$ où $i$ est l'indice d'une tâche appartenant à un ensemble de tâches déterminé, ledit ensemble de tâches étant constitué par les tâches de la première liste dont la priorité est supérieure strictement à celle de ladite tâche donnée, où $E[i]$ et $D[i]$ représentent respectivement la date d'échéance et la durée de la tâche d'indice $i$, où $H0$ représente le prochain temps libre pour l'exécution d'une tâche ;
- si la seconde liste contient au moins une tâche, on réalise au moins un second filtrage appliqué à la seconde liste ou une partie de celle-ci, le résultat de ce second filtrage étant une troisième liste ne contenant que les tâches dont la date d'activation est inférieure ou égale au prochain temps libre $H0$ pour l'exécution d'une tâche ;
- si la troisième liste contient au moins une tâche, on choisit la prochaine tâche à exécuter parmi les tâches de cette liste.

L'invention concerne aussi un procédé d'ordonnancement dans lequel :

- on réalise au moins les deux premiers filtrages précédents ;
- si la troisième liste contient au moins une tâche, on réalise au moins un troisième filtrage appliqué à la troisième liste ou une partie de celle-ci, le résultat de ce troisième filtrage étant une quatrième liste ne contenant que les tâches dont la priorité est supérieure ou égale à une priorité déterminée ;
- on choisit la prochaine tâche à exécuter parmi les tâches de la quatrième liste.

L'invention concerne aussi un procédé d'ordonnancement dans lequel :

- on réalise au moins les trois premiers filtrages précédents ;
- on réalise au moins un quatrième filtrage appliqué à la quatrième liste ou une partie de celle-ci, le résultat de ce quatrième filtrage étant une cinquième liste ne contenant que les tâches dont les contraintes temporelles respectent un critère déterminé ;
- si la cinquième liste contient au moins une tâche, on choisit la prochaine tâche à exécuter parmi les tâches de cette liste.

Si la quatrième liste ou la partie de celle-ci à laquelle est appliqué le quatrième filtrage ne contient que des tâches périodiques, ce critère déterminé peut être tel que le résultat du quatrième filtrage ne contient que les tâches dont le rapport entre le délai jusqu'à la dernière date d'exécution d'une part, et la période de la tâche d'autre part, est le plus grand.

L'invention sera maintenant décrite de manière plus détaillée dans le cadre d'un exemple particulier de mise en oeuvre pratique appliquée à un radar. Dans le cours de cette description, on fera référence aux figures des dessins annexés, parmi lesquelles :

- la figure 1, un chronogramme, représente un exemple de tâches destinées à être ordonnancées ;
- la figure 2, un diagramme fonctionnel, représente des étapes d'un exemple de procédé selon l'invention.

On distingue les tâches de nature sporadique des tâches de nature périodique.

Les tâches de nature sporadique sont destinées à être exécutées entre deux dates. La première date est appelée la date d'activation de la tâche. Le début d'exécution d'une tâche sporadique suit normalement la date d'activation de cette tâche. En d'autres termes, la date d'activation d'une tâche sporadique est la date à partir de laquelle la tâche devient éligible. La seconde date est appelée la date d'échéance de la tâche. La fin d'exécution d'une tâche sporadique précède normalement la date d'échéance de cette tâche.

Les tâches de nature périodique sont destinées à être exécutées à intervalle de temps régulier. On associe à chaque tâche périodique, par analogie avec les tâches sporadiques, une date d'activation et une date d'échéance. Ces dates d'activation et d'échéance sont déterminées pour chaque période, c'est à dire pour chaque occurrence de la tâche.

Une tâche est soumise à des contraintes temporelles plus ou moins fortes. On distingue les tâches urgentes des tâches non urgentes.

Une tâche urgente est une tâche devant impérativement être exécutées entre sa date d'activation et sa date d'échéance. Une tâche non urgente est une tâche pouvant être exécutée en dehors de sa date d'activation et de sa date d'échéance. En d'autres termes, le début d'exécution d'une tâche non urgente peut précéder sa date d'activation, et la fin d'exécution d'une tâche non urgente peut suivre sa date d'échéance.

En général, les tâches urgentes sont de nature sporadique et les tâches non urgentes sont de nature périodique. En d'autres termes, les contraintes temporelles des tâches périodiques sont généralement moins strictes que celles des tâches sporadiques. Il est donc possible d'exécuter une tâche périodique avant sa date d'activation ou après sa date d'échéance.

On attribue à chaque tâche un degré de priorité. Ce degré de priorité peut être représenté par un nombre entier. Par exemple, une valeur basse correspond à une tâche peu prioritaire, une valeur élevée correspond à une tâche très prioritaire.

Selon l'invention, les tâches sont ordonnancées une à une, et on prend en compte les nouvelles tâches à chaque fois qu'une tâche est ordonnancée, c'est à dire dès que la prochaine tâche à exécuter est choisie.

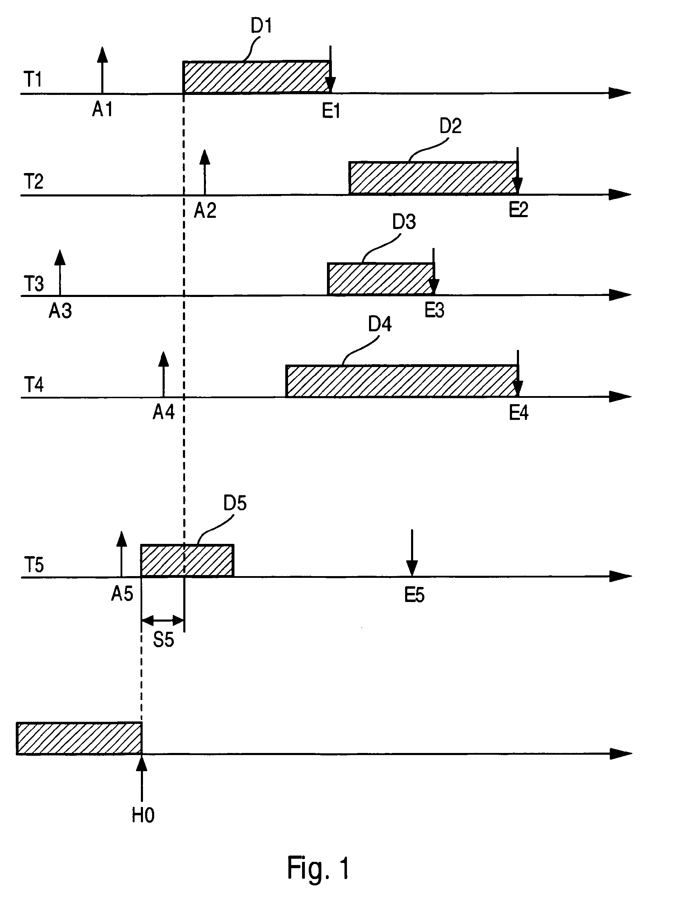

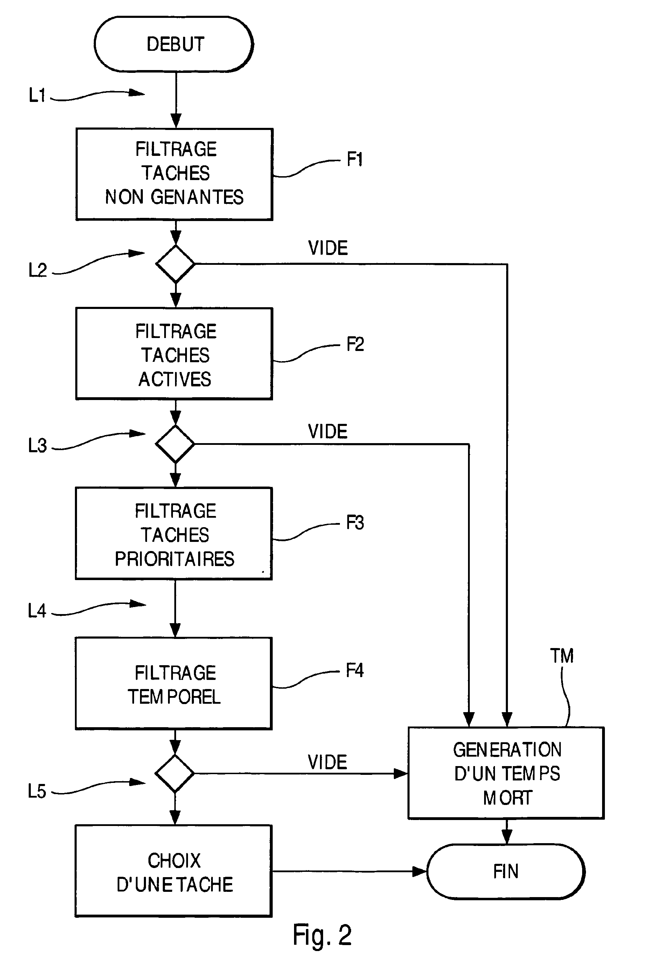

On se réfère aux figures 1 à 2. Le procédé d'ordonnancement selon l'invention permet de s'affranchir du temps de latence lié à la construction de trames. Les tâches à ordonnancer forment une première liste L1 de tâches.

La liste L1 peut être modifiée dès qu'une tâche est ordonnancée, c'est à dire dès le choix de la prochaine tâche à exécuter. Cette tâche choisie peut s'exécuter directement, c'est à dire au prochain temps libre d'exécution H0. Le prochain temps libre d'exécution H0 est la première date à partir de laquelle il est possible d'exécuter une tâche. Cette tâche peut aussi s'exécuter après un temps mort, c'est à dire après un intervalle de temps pendant lequel aucune tâche n'est exécutée.

Le choix de la prochaine tâche à exécuter peut être réalisé en appliquant des filtrages successifs F1, F2, F3, F4 selon des règles déterminées. Ces filtrages permettent de réduire peu à peu le nombre de tâches éligibles pour n'en obtenir qu'une au bout du compte ou aucune. Si aucune tâche n'est retenue après ces filtrages successifs, on peut générer un temps mort.

Selon l'invention, on applique à la liste des tâches à ordonnancer un premier filtrage F1 des tâches non gênantes. Les tâches gênantes sont celles qui si elles étaient exécutées au prochain temps libre H0 pourraient gêner l'exécution d'une autre tâche plus prioritaire (de degré de priorité plus élevé) de la liste L1.

Afin d'effectuer le premier filtrage F1 des tâches non gênantes, on sélectionne successivement chaque tâche T5 de la liste L1 contenant les tâches destinées à être ordonnancées. Si la priorité de la tâche sélectionnée est supérieure ou égale à celle de toutes les tâches de la liste L1, on retient la tâche sélectionnée. Sinon, on détermine une durée maximale d'exécution théorique de la tâche sélectionnée.

Par exemple pour la tâche T5 représentée sur la figure 1, on considère les tâches T1, T2, T3, T4 de priorité supérieure strictement à celle de la tâche T5. On note E1, E2, E3 et E4 leurs dates d'échéance. On note D1, D2, D3 et D4 leurs durées. La durée maximale d'exécution théorique S5 de la tâche T5 est le minimum des durées de l'ensemble suivant :

$$\{ \ E1 - D1 - H0 \ ; \ E2 - D2 - H0 \ ; \ E2 - D2 - H0 \ ; \ E3 - D3 - H0 \ ; \ E4 - D4 - H0 \ \}$$

Plus généralement, la durée maximale d'exécution théorique d'une tâche sélectionnée est la plus petite valeur de la quantité suivante :

$$E[\,i\,] - D[\,i\,] - H0$$

L'indice i représente l'une des tâches dont la priorité est supérieure strictement à la tâche sélectionnée ; où E[i] représente la date d'échéance de la tâche d'indice i ; où D[i] représente la durée de la tâche d'indice i.

La quantité E[i] - D[i] - H0 représente la durée que ne doit pas dépasser une tâche dont l'exécution débute à partir du temps H0, pour que la tâche d'indice i puisse s'exécuter après sans dépasser son échéance.

Si la durée de la tâche sélectionnée T5 est inférieure ou égale à la durée maximale d'exécution théorique S5, on retient ladite tâche sélectionnée. Sinon, la tâche sélectionnée n'est pas retenue (ce qui est le cas sur la figure 1).

Après avoir sélectionné toutes les tâches de la liste L1, on choisit la prochaine tâche à exécuter parmi les tâches retenues.

Avantageusement, on sélectionne les tâches de la liste L1 par ordre de priorité décroissante. De cette manière, la détermination de la durée maximale théorique d'une tâche peut se faire en utilisant la durée maximale théorique déterminée pour la tâche précédente.

Après le filtrage F1 des tâches non gênantes, on réalise un second filtrage F2. Ce second filtrage peut être effectué directement après le premier filtrage F1. Bien entendu, il est possible d'effectuer un ou plusieurs filtrages intermédiaires entre les filtrages F1 et F2. En d'autres termes, le filtrage F1 est appliqué à la seconde liste L2 ou une partie de celle-ci (le résultat d'un autre filtrage par exemple).

Le second filtrage F2 vise à éliminer les tâches inactives, c'est à dire celles dont la date d'activation est supérieure strictement au prochain temps libre H0 pour l'exécution d'une tâche. En d'autres termes, on réalise un second filtrage F2, le résultat de ce second filtrage étant une troisième liste L3 ne contenant que les tâches dont la date d'activation A1, A2, A3, A4 est inférieure ou égale au prochain temps libre H0 pour l'exécution d'une tâche.

En effectuant le premier et le second filtrage dans cet ordre, on évite de choisir une tâche dont l'exécution pourrait empêcher l'exécution d'une tâche plus prioritaire, même si cette tâche plus prioritaire est inactive au moment de ce choix.

Avantageusement, après le filtrage F2 des tâches actives, s'il reste plusieurs tâches dans la liste L3, on peut réaliser un troisième filtrage F3. Ce troisième filtrage F3 vise à éliminer les tâches non prioritaires. En d'autres termes, on peut réaliser un troisième filtrage F3, appliqué à la troisième liste L3 ou une partie de celle-ci. Le résultat de ce troisième filtrage est une quatrième liste L4 qui ne contient que les tâches dont la priorité est supérieure à une priorité déterminée. Cette priorité déterminée peut être par exemple 80% de la priorité la plus haute des tâches auquel est appliqué ce filtrage F3.

Avantageusement, cette priorité déterminée est la priorité la plus haute des tâches auquel est appliqué ce filtrage F3. En d'autres termes, le résultat de ce filtrage sur les priorités ne contient que les tâches dont la priorité est maximale.

Avantageusement, après le filtrage F3 des tâches prioritaires, on peut réaliser un quatrième filtrage F4. Ce quatrième filtrage vise à éliminer les tâches à partir de contraintes temporelles. Ce filtrage peut être appliqué à la quatrième liste L4 ou à une partie de celle-ci. Le résultat de ce quatrième filtrage est une cinquième liste L5 qui ne contient que les tâches dont les contraintes temporelles respectent un critère déterminé. Ce critère peut être par exemple celui de la date d'échéance la plus proche. Dans ce cas, le filtrage F4 consiste à ne retenir que les tâches dont la date d'échéance est la plus proche.

Avantageusement, si la liste L4 ne contient que des tâches périodiques, le critère peut par exemple être de minimiser l'écart avec la période nominale. Dans ce cas, le filtrage F4 consiste à ne retenir que les tâches dont le rapport entre le délai jusqu'à la dernière date d'exécution d'une part, et la période de la tâche d'autre part, est le plus grand.

Après le filtrage F2 et le cas échéant d'autres filtrages F3, F4, plusieurs cas sont possibles. S'il ne reste qu'une seule tâche, cette tâche est choisie. S'il reste plusieurs tâches, on peut en choisir une indifféremment. S'il ne reste aucune tâche, on peut générer un temps mort TM.

Après avoir choisi une tâche on peut :

- si cette tâche est une tâche périodique : mettre à jour sa date d'activation et sa date d'échéance pour sa prochaine exécution, et le cas échéant d'autres données ;
- si cette tâche est une tâche sporadique : la supprimer de la liste L1.

Les tâches sporadiques dont la date d'échéance est dépassée peuvent être aussi supprimées de la liste L1. On peut ajouter de nouvelles tâches à la liste L1. On peut alors choisir la prochaine tâche à exécuter dans la liste L1 ainsi modifiée en appliquant à nouveau le procédé selon l'invention.

**Revendications**

1. Procédé d'ordonnancement de tâches **caractérisé en ce que** :

   - on réalise au moins un premier filtrage (F1), ce filtrage étant appliqué à une première liste (L1) contenant des tâches destinées à être ordonnancées, le résultat de ce filtrage étant une seconde liste (L2) ne contenant que les tâches de la première liste (L1) de priorité maximale ou dont la durée d'exécution (D5) est inférieure ou égale à une durée maximale théorique (S5), ladite durée maximale théorique (S5) pour une tâche donnée (T5) étant le minimum de la quantité E[i] - D[i] - H0 où i est l'indice d'une tâche appartenant à un ensemble de tâches (T1, T2, T3, T4) déterminé, ledit ensemble de tâches étant constitué par les tâches de la première liste (L1) dont la priorité est supérieure strictement à celle de ladite tâche donnée, où E[i] et D[i] représentent respectivement la date d'échéance et la durée de la tâche d'indice i, où H0 représente le prochain temps libre pour l'exécution d'une tâche ;
   - si la seconde liste (L2) contient au moins une tâche, on réalise au moins un second filtrage (F2) appliqué à la seconde liste (L2) ou une partie de celle-ci, le résultat de ce second filtrage étant une troisième liste (L3) ne contenant que les tâches dont la date d'activation (A1, A3) est inférieure ou égale au prochain temps libre H0 pour l'exécution d'une tâche ;
   - si la troisième liste (L3) contient au moins une tâche, on choisit la prochaine tâche à exécuter parmi les tâches de cette liste.

2. Procédé d'ordonnancement de tâches **caractérisé en ce que** :

   - on réalise au moins les deux premiers filtrages (F1, F2) selon la revendication 1 ;
   - si la troisième liste (L3) contient au moins une tâche, on réalise au moins un troisième filtrage (F3) appliqué à la troisième liste (L3) ou une partie de celle-ci, le résultat de ce troisième filtrage étant une quatrième liste (L4) ne contenant que les tâches dont la priorité est supérieure ou égale à une priorité déterminée ;
   - on choisit la prochaine tâche à exécuter parmi les tâches de la quatrième liste (L4).

3. Procédé d'ordonnancement selon la revendication 2 **caractérisé en ce que** le résultat du troisième filtrage (F3) ne contient que les tâches dont la priorité est maximale.

4. Procédé d'ordonnancement de tâches **caractérisé en ce que** :

- on réalise au moins les trois premiers filtrages (F1, F2, F3) selon l'une quelconque des revendications 2 et 3 ;
- on réalise au moins un quatrième filtrage (F4) appliqué à la quatrième liste (L4) ou une partie de celle-ci, le résultat de ce quatrième filtrage étant une cinquième liste (L5) ne contenant que les tâches dont les contraintes temporelles respectent un critère déterminé ;
- si la cinquième liste (L5) contient au moins une tâche, on choisit la prochaine tâche à exécuter parmi les tâches de cette liste.

**5.** Procédé d'ordonnancement de tâches selon la revendication 4, **caractérisé en ce que** si la quatrième liste (L4) ou la partie de celle-ci à laquelle est appliqué le quatrième filtrage (F4) ne contient que des tâches périodiques, le résultat du quatrième filtrage ne contient que les tâches dont le rapport entre le délai jusqu'à la dernière date d'exécution d'une part, et la période de la tâche d'autre part, est le plus grand.

## Claims

**1.** Method of scheduling tasks **characterized in that**:

- at least one first filtering (F1) is carried out, this filtering being applied to a first list (L1) containing tasks intended to be scheduled, the result of this filtering being a second list (L2) containing only the tasks of the first list (L1) of maximum priority or whose duration of execution (D5) is less than or equal to a theoretical maximum duration (S5), the said theoretical maximum duration (S5) for a given task (T5) being the minimum of the quantity $E[i] - D[i] - H0$ where i is the index of a task belonging to a determined set of tasks (T1, T2, T3, T4), the said set of tasks being constituted by the tasks of the first list (L1) whose priority is strictly greater than that of the said given task, where $E[i]$ and $D[i]$ respectively represent the deadline date and the duration of the task of index i, where H0 represents the next free time for the execution of a task;
- if the second list (L2) contains at least one task, then at least one second filtering (F2) applied to the second list (L2) or a part of the latter is carried out, the result of this second filtering being a third list (L3) containing only the tasks whose date of activation (A1, A3) is less than or equal to the next free time H0 for the execution of a task;
- if the third list (L3) contains at least one task, then the next task to be executed is chosen from among the tasks of this list.

**2.** Method of scheduling tasks **characterized in that**:

- at least the first two filterings (F1, F2) according to Claim 1 are carried out;
- if the third list (L3) contains at least one task, then at least a third filtering (F3) applied to the third list (L3) or a part of the latter is carried out, the result of this third filtering being a fourth list (L4) containing only the tasks whose priority is greater than or equal to a determined priority;
- the next task to be executed is chosen from among the tasks of the fourth list (L4).

**3.** Method of scheduling according to Claim 2, **characterized in that** the result of the third filtering (F3) contains only the tasks whose priority is maximum.

**4.** Method of scheduling tasks **characterized in that**:

- at least the first three filterings (F1, F2, F3) according to any one of Claims 2 and 3 are carried out;
- at least a fourth filtering (F4) applied to the fourth list (L4) or a part of the latter is carried out, the result of this fourth filtering being a fifth list (L5) containing only the tasks whose temporal constraints comply with a determined criterion;
- if the fifth list (L5) contains at least one task, then the next task to be executed is chosen from among the tasks of this list.

**5.** Method of scheduling tasks according to Claim 4, **characterized in that** if the fourth list (L4) or the part of the latter to which the fourth filtering (F4) is applied contains only periodic tasks, the result of the fourth filtering contains only the tasks for which the ratio of the waiting period up to the last date of execution on the one hand, to the period of the task on the other hand, is the largest.

**Patentansprüche**

1. Verfahren zur Ablaufplanung von Tasks, **dadurch gekennzeichnet, dass**:

   - mindestens eine erste Filterung (F1) durchgeführt wird, wobei diese Filterung an eine erste Liste (L1) angewendet wird, die Tasks enthält, deren Ablauf geplant werden soll, wobei das Ergebnis dieser Filterung eine zweite Liste (L2) ist, die nur die Tasks der ersten Liste (L1) mit maximaler Priorität, oder deren Ausführungsdauer (D5) kürzer als eine oder gleich einer maximalen theoretischen Dauer (S5) ist, enthält, wobei die maximale theoretische Dauer (S5) für eine gegebene Task (T5) das Minimum der Menge E[i]-D[i]-H0 ist, wobei i der Index einer Task ist, die zu einer bestimmten Einheit von Tasks (T1, T2, T3, T4) gehört, wobei die Einheit von Tasks aus den Tasks der ersten Liste (L1) besteht, deren Priorität strikt höher ist als diejenige der gegebenen Task, wobei E[i] und D[i] das Fälligkeitsdatum bzw. die Dauer der Task mit dem Index i bedeuten, wobei H0 die nächste freie Zeit zur Ausführung einer Task bedeutet;
   - wenn die zweite Liste (L2) mindestens eine Task enthält, mindestens eine zweite Filterung (F2) durchgeführt wird, die an die zweite Liste (L2) oder einen Teil von ihr angewendet wird, wobei das Ergebnis dieser zweiten Filterung eine dritte Liste (L3) ist, die nur die Tasks enthält, deren Aktivierungsdatum (A1, A3) unter der nächsten freien Zeit H0 zur Ausführung einer Task liegt oder gleich ihr ist;
   - wenn die dritte Liste (L3) mindestens eine Task enthält, die nächste auszuführende Task unter den Tasks dieser Liste ausgewählt wird.

2. Verfahren zur Ablaufplanung von Tasks, **dadurch gekennzeichnet, dass**:

   - mindestens die beiden ersten Filterungen (F1, F2) nach Anspruch 1 durchgeführt werden;
   - wenn die dritte Liste (L3) mindestens eine Task enthält, mindestens eine dritte Filterung (F3) durchgeführt wird, die an die dritte Liste (L3) oder einen Teil von ihr angewendet wird, wobei das Ergebnis dieser dritten Filterung eine vierte Liste (L4) ist, die nur die Tasks enthält, deren Priorität höher als eine oder gleich einer vorbestimmten Priorität ist;
   - die nächste auszuführende Task aus den Tasks der vierten Liste (L4) ausgewählt wird.

3. Ablaufplanungsverfahren nach Anspruch 2, **dadurch gekennzeichnet, dass** das Ergebnis der dritten Filterung (F3) nur die Tasks enthält, deren Priorität maximal ist.

4. Verfahren zur Ablaufplanung von Tasks, **dadurch gekennzeichnet, dass**:

   - mindestens die drei ersten Filterungen (F1, F2, F3) nach einem der Ansprüche 2 und 3 durchgeführt werden;
   - mindestens eine vierte Filterung (F4) durchgeführt wird, die an die vierte Liste (L4) oder einen Teil von ihr angewendet wird, wobei das Ergebnis dieser vierten Filterung eine fünfte Liste (L5) ist, die nur die Tasks enthält, deren zeitliche Zwänge ein bestimmtes Kriterium respektieren;
   - wenn die fünfte Liste (L5) mindestens eine Task enthält, die nächste auszuführende Task aus den Tasks dieser Liste ausgewählt wird.

5. Verfahren zur Ablaufplanung von Tasks nach Anspruch 4, **dadurch gekennzeichnet, dass**, wenn die vierte Liste (L4) oder der Teil von ihr, an den die vierte Filterung (F4) angewendet wird, nur periodische Tasks enthält, das Ergebnis der vierten Filterung nur die Tasks enthält, deren Verhältnis zwischen der Frist bis zum letzten Ausführungsdatum einerseits und der Periode der Task andererseits am größten ist.

EP 1 359 433 B1

Fig. 1

8

Fig. 2